# DEMANDE DE BREVET EUROPEEN

(11) **EP 2 306 414 A1**
(43) Date de publication de la demande: **06.04.2011**
(21) Numéro de dépôt: 09305943.4
(22) Date de dépôt: 05.10.2009
(51) Int. Cl.: G07F 7/08, G06K 7/00

(54) **Procédé de communication entre un lecteur et deux cartes à puce**

(71) Demandeur: Gemalto SA, 92190 Meudon (FR)
(72) Inventeur: Rhelimi, Alain, 92197 MEUDON CEDEX (FR); Barbe, Serge, 92197 MEUDON CEDEX (FR)

(57) **Abrégé**

L'invention concerne un procédé de communication entre une carte à puce maître sans contact (2) et une carte à puce esclave sans contact (3) par l'intermédiaire d'un lecteur de cartes à puce présentant une interface de communication sans contact (1), la carte à puce maître (2) exécutant une application destinée à réaliser une transaction sécurisée avec la carte à puce esclave (2), le procédé comprenant les étapes de :
-ladite application de la carte à puce maître (2) transmet au lecteur une commande destinée à la carte à puce esclave (3) ;
-le lecteur transmet la commande à la carte à puce esclave ;
-la carte à puce esclave transmet au lecteur une réponse à la commande ;
-le lecteur transmet la réponse à la carte à puce maître et signale sa disponibilité pour une nouvelle commande ;
-ladite application de la carte à puce maître (2) traite ladite réponse.

## Description

L'invention concerne la mise en oeuvre d'une transaction sécurisée par l'intermédiaire d'une carte à puce, et en particulier la réalisation d'une transaction avec une carte à puce d'un type largement diffusé et standardisé tel qu'une carte à puce bancaire.

Un processus de transaction sécurisée entre deux cartes à puce et un lecteur de carte à puce est connu. Un lecteur de carte à puce dispose à cet effet de deux interfaces de communication destinées à recevoir deux cartes à puce respectives, par exemple une carte à puce bancaire et une carte à puce d'un commerçant. Les interfaces de communication disposent de lamelles métalliques destinées à établir un contact électrique avec des contacts de surface des cartes à puce.

Lors d'une transaction, le lecteur fonctionne en maître et les cartes à puce fonctionnent en esclave. Les cartes à puce ne font en pratique que répondre à une application sécurisée du lecteur qui les interroge. L'application sécurisée est par exemple exécutée dans le lecteur pour permettre de saisir le montant d'une transaction et effectuer des vérifications d'authenticité et de titularité sur chacune des cartes avant de valider la transaction.

La fiabilité d'un tel lecteur peut s'avérer en pratique relativement limitée, la communication avec l'une des cartes pouvant être interrompue dans un milieu hostile ou agressif. De plus, les interfaces de communication du lecteur sont relativement sensibles à des dégradations lorsque le lecteur est à demeure dans un lieu public. La mise à jour des applications sécurisées du lecteur peut en outre être délicate à réaliser. Par ailleurs, le coût d'un lecteur avec une application dédiée peut dissuader un utilisateur de procéder à son acquisition.

L'invention vise à résoudre un ou plusieurs de ces inconvénients. L'invention porte ainsi sur un procédé de communication entre une carte à puce maître et une carte à puce esclave par l'intermédiaire d'un lecteur de cartes à puce, la carte à puce maître exécutant une application destinée à réaliser une transaction sécurisée avec la carte à puce esclave, le procédé comprenant les étapes de :
- ladite application de la carte à puce maître transmet au lecteur une commande destinée à la carte à puce esclave ;
- le lecteur transmet la commande à la carte à puce esclave;
- la carte à puce esclave transmet au lecteur une réponse à la commande;
- le lecteur transmet la réponse à la carte à puce maître et signale sa disponibilité pour une nouvelle commande;
- ladite application de la carte à puce maître traite ladite réponse;
- lesdites cartes à puce étant des cartes à puce sans contact, le lecteur de carte à puce présentant une interface de communication sans contact (1), lesdites transmissions étant effectuées depuis et vers l'interface de communication sans contact.

L'invention porte également sur une carte à puce sans contact, comprenant :
- une interface de communication sans contact ;
- une mémoire mémorisant une application apte à identifier par l'intermédiaire de l'interface de communication la disponibilité d'un lecteur pour la soumission d'une commande à destination d'une autre carte à puce, apte à soumettre une telle commande au lecteur, et apte à réaliser une transaction sécurisée avec ladite autre carte;
- un module de traitement apte à exécuter l'application mémorisée.

L'invention porte par ailleurs sur un lecteur de cartes à puce sans contact, comprenant une interface de communication sans contact, et un module de traitement apte, par l'intermédiaire de l'interface de communication sans contact, à recevoir des commandes d'une première carte à puce exécutant une application sécurisée maître, à indiquer sa disponibilité pour la réception de commandes de la part de la première carte à puce, à transmettre une commande reçue de la première carte à puce à une deuxième carte à puce, à recevoir une réponse de la deuxième carte à puce, et à transmettre la réponse reçue à la première carte à puce.

Selon une variante, le lecteur comprend un écran d'affichage et une interface de commande pour un utilisateur, le module de traitement étant apte à proposer sur l'écran d'affichage l'exécution d'une application sécurisée d'une carte à puce sans contact, apte à déterminer la sélection par l'utilisateur d'une application sécurisée par l'intermédiaire de l'interface de commande, et apte à indiquer sa disponibilité pour la réception de commandes à la carte à puce disposant de l'application sécurisée sélectionnée.

L'invention porte en outre sur un système comprenant:
- un lecteur de cartes à puce tel que décrit ci-dessus;
- une carte à puce telle que décrite ci-dessus;
- une carte à puce sans contact apte à répondre à des commandes transmises par le lecteur.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un lecteur de cartes à puce sans contact apte à mettre en oeuvre l'invention ;
- la figure 2 est une représentation schématique d'une carte à puce maître;
- la figure 3 est une représentation schématique d'un lecteur réalisant une transaction sans contact avec une carte à puce maître et une carte à puce esclave ;
- la figure 4 représente un exemple d'échange de messages entre le lecteur et les cartes à puce;
- les figures 5 et 6 représentent en perspective un mode de réalisation d'un lecteur associé à une carte à puce maître et une carte à puce esclave.

L'invention propose de faire communiquer une carte à puce maître sans contact avec une carte à puce esclave sans contact par l'intermédiaire d'un lecteur de cartes à puce sans contact. La carte à puce maître exécute une application pour réaliser une transaction sécurisée avec la carte à puce esclave. L'application transmet une commande au lecteur, cette commande étant destinée à la carte à puce esclave. Le lecteur transmet la commande à la carte à puce esclave. La carte à puce esclave transmet au lecteur une réponse à la commande. Le lecteur transmet la réponse à la carte à puce maître et signale sa disponibilité pour une nouvelle commande. L'application de la carte à puce maître traite cette réponse pour poursuivre la transaction.

L'interface de communication sans contact du lecteur avec les cartes permet une communication fiable en milieu difficile, par exemple un milieu potentiellement souillé tel qu'une pompe à essence, un milieu à forte humidité ou un milieu abrasif. On évite ainsi le manque de fiabilité de la communication d'une interface avec contact, dans laquelle la détérioration des contacts électriques peut induire une impossibilité de communiquer. On augmente également la résistance du lecteur dans un milieu hostile. Le lecteur selon l'invention est ainsi insensible au vandalisme fréquemment pratiqué sur des interfaces de lecture de carte à puce avec contact (obturation ou destruction du rail d'introduction de la carte à puce par exemple), implantées par exemple sur des parcmètres. Par ailleurs, l'invention permet de disposer d'un lecteur de coût réduit avec des fonctionnalités réduites, puisqu'il ne doit pas nécessairement disposer d'une application sécurisée.

De plus, le coût du lecteur pourra être mutualisé entre plusieurs utilisateurs du lecteur sans risque de faille de sécurité, puisque l'application sécurisée est stockée dans une carte maître distincte dédiée à chaque utilisateur. De nouvelles applications sécurisées dédiées pourront en outre être diffusées aisément en fournissant une carte maître à chaque utilisateur, par exemple par courrier postal. Le lecteur ne limite plus le nombre d'applications sécurisées pouvant être mises en oeuvre puisqu'un lecteur peut être utilisé pour autant d'applications sécurisées qu'il y a de cartes sécurisées. L'invention permet en outre de mettre en oeuvre la transaction sécurisée sans nécessiter de modification des cartes esclaves déjà en circulation, telles que les cartes à puce bancaires actuellement diffusées à grande échelle.

La technologie de communication sans contact en champ proche est généralement connue sous l'acronyme NFC (pour Near Field Communication en langue anglaise). Cette communication est basée sur la modulation d'un champ magnétique produit par la bobine du lecteur de carte à puce d'une part, et en retour sur la modulation du courant induit par couplage dans la bobine d'une carte. Des protocoles de modulation pour une transmission en NFC sont notamment définis dans des standards tels que l'ISO 14443 et l'ISO 18092 ainsi que des couches supplémentaires associées telles que le NFC Peer to Peer.

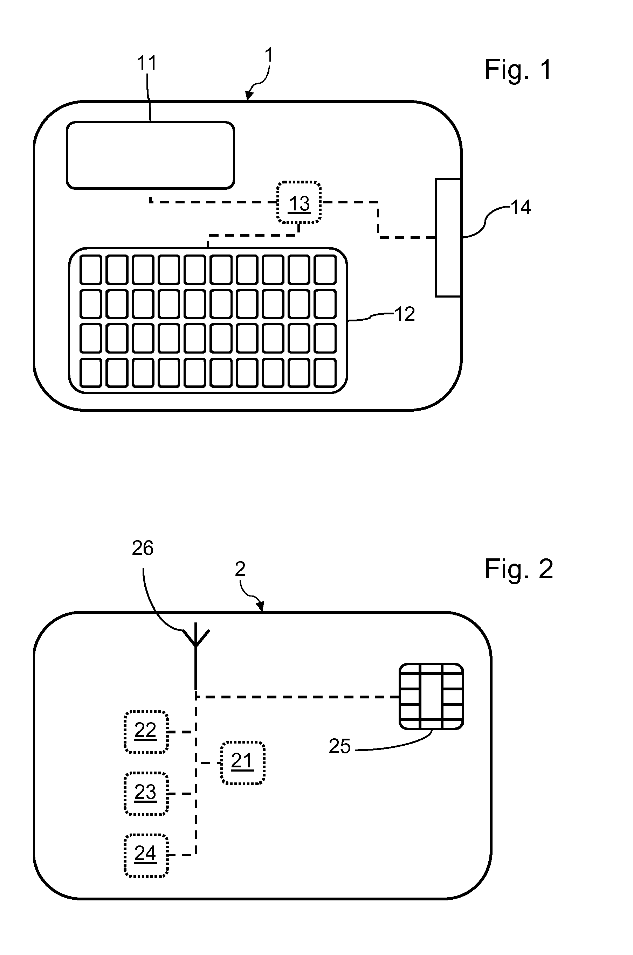

La figure 1 représente de façon schématique un lecteur de carte à puce 1. Le lecteur de cartes à puce 1 comprend de façon connue en soi un afficheur 11 avec un écran à cristaux liquides et un clavier 12 formant des interfaces de communication avec un utilisateur. Le lecteur 1 comprend en outre un module de traitement 13 apte à gérer le fonctionnement de l'afficheur 11 et du clavier 12. L'afficheur 11 permettra par exemple d'afficher des choix pour l'utilisateur, des instructions ou des montants de transaction. Le clavier 12 permettra par exemple de saisir un montant de transaction, un code d'identification personnel (PIN) ou une sélection d'une option du lecteur 1. La lecteur 1 comprend en outre de façon connue en soi une interface de communication sans contact 14 adaptée pour communiquer avec des cartes à puce. L'interface 14 est connectée au module de traitement 13. Le module de traitement 13 est capable de réaliser de façon connue en soi une gestion anti-collision des cartes à puce présentes dans le champ de communication de son interface 14. Le module de traitement 13 comprend une application dite réflecteur dont le fonctionnement est détaillé par la suite. Cette application réflecteur est générique et permet de router une commande ou une réponse d'une carte à puce vers l'autre carte à puce.

La figure 2 représente de façon schématique la structure d'un circuit intégré d'une carte à puce 2. Le circuit intégré comprend notamment un module de traitement 21, une mémoire vive 22, une mémoire morte 23, une mémoire non volatile 24 réinscriptible, une interface de communication par contacts de surface 25 et une interface de transmission sans contact 26. Ces différents composants sont connectés de façon connue en soi par des circuits appropriés.

La carte à puce maître 2 mémorise soit dans la mémoire morte 23 soit dans la mémoire non volatile 24 une application logicielle destinée à gérer une transaction sécurisée avec une autre carte à puce. Cette application sécurisée sera exécutée au moyen du module de traitement 21 et de la mémoire vive 22.

L'application sécurisée réalise les fonctions usuellement mises en oeuvre par un lecteur de carte à puce pour réaliser une transaction sécurisée. L'application sécurisée fonctionne en maître par rapport à la carte à puce esclave, cette application générant les commandes et les requêtes devant être appliquées sur la carte à puce esclave pour réaliser la transaction. La carte à puce maître 2 pourra embarquer plusieurs applications sécurisées différentes utilisables par l'utilisateur du lecteur 1. Les applications sécurisées pourront être de différentes natures : transactions bancaires, contrôle d'accès...

En localisant l'application sécurisée sur la carte à puce maître 2, la structure du lecteur 1 peut être fortement simplifiée. Un simple lecteur banalisé assurant un transfert des commandes et des réponses entre les cartes à puce pourra être utilisé. En utilisant l'application sécurisée de la carte à puce maître 2, on peut réaliser une transaction sécurisée indépendamment du type de lecteur mis en oeuvre. Le lecteur pourra par exemple comprendre un module de traitement réalisé en logique câblée et non conçu pour être mis à jour. Bien entendu, des lecteurs plus complexes comprenant des applications sécurisées pourront également être utilisés pour mettre en oeuvre l'invention. La carte 2 peut être personnalisée avec une application sécurisée par tout moyen approprié, soit dans un centre de personnalisation, soit à distance par un processus dit OTA.

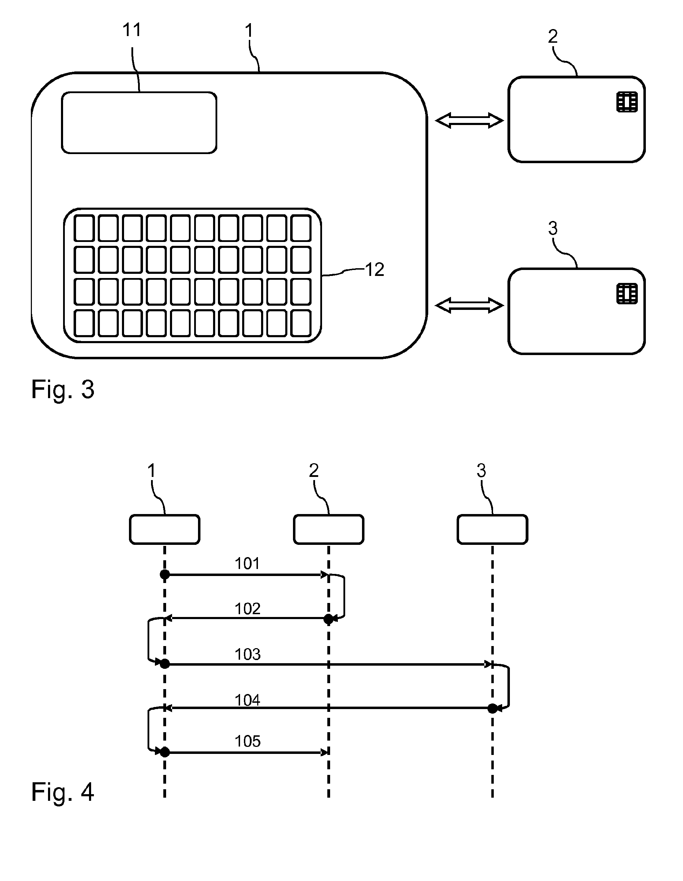

La figure 3 illustre schématiquement le lecteur 1 mis en oeuvre pour réaliser une transaction sécurisée entre la carte à puce maître 2 et la carte à puce esclave 3. La carte esclave 3 pourra être de tout type déjà en service, cette carte pouvant être utilisée de façon inchangée dans le cadre de l'invention : la carte esclave 3 reçoit toujours des commandes auxquelles elle se contente de répondre.

Un exemple de transaction sécurisée va maintenant être détaillé. Le lecteur 1 réalise initialement une phase d'anti-collision avec les cartes à puce placées dans son champ de communication sans contact. Le lecteur 1 peut proposer à l'utilisateur de sélectionner une carte maître parmi plusieurs présentes dans son champ de communication, par l'intermédiaire de l'écran 11 et du clavier 12. Le lecteur 1 peut également sélectionner une application sécurisée d'une carte à puce maître à utiliser pour réaliser la transaction sécurisée, lorsque plusieurs applications sécurisées sont disponibles.

Un exemple de routage de données entre le lecteur 1 et les cartes à puce 2 et 3 est illustré en référence à la figure 4. Lors d'une étape 101, le lecteur 1 a préalablement déterminé qu'une application sécurisée de la carte à puce 2 est maître dans une transaction avec la carte à puce 3. Le lecteur 1 transmet un message à la carte à puce 2 pour requérir une commande.

En réponse, à l'étape 102, la carte à puce 2 transmet une commande au lecteur 1, cette commande étant destinée à la carte à puce esclave 3.

À l'étape 103, le lecteur 1 transmet cette commande à la carte à puce esclave 3.

À l'étape 104, la carte à puce esclave 3 transmet une réponse à la commande au lecteur 1.

À l'étape 105, le lecteur 1 transmet la réponse à la carte à puce maître 2 et lui signale sa disponibilité pour une nouvelle commande. L'application sécurisée de la carte à puce 2 traite la réponse reçue et transmet éventuellement une nouvelle commande au lecteur 1 à destination de la carte à puce esclave 3, pour permettre la poursuite de la transaction.

Pour mettre en oeuvre ce procédé, le lecteur 1 est capable de fonctionner en réflecteur pour recevoir une commande de la carte 2 et la transmettre à la carte 3. De plus, le lecteur 1 est capable de recevoir une réponse de la carte 3 pour la transmettre à la carte 2. Par ailleurs, le lecteur 1 est capable de requérir une commande de la carte 2 ou de lui signaler sa disponibilité pour recevoir une nouvelle commande. La carte 2 est apte à générer des commandes à destination de la carte esclave 3. La carte 2 est également capable d'interpréter les messages du lecteur 1 requérant une commande ou indiquant une disponibilité pour une telle commande.

Le lecteur 1 sélectionne une carte à chaque échange et suspend toutes les autres. Dans la communication entre la carte maître 2 et la carte esclave 3, le lecteur sélectionne ainsi séquentiellement chacune de ces cartes. Ainsi, le lecteur 1 ne communique simultanément qu'avec une seule des cartes. Le lecteur 1 peut établir un tunnel de communication avec chacune des cartes, les données échangées étant chiffrées ou pas de façon connue en soi.

Les cartes à puce 2 et 3 peuvent communiquer avec le lecteur 1 par l'intermédiaire de protocoles de communication standardisés (tels que l'ISO 14443, l'ISO 18092 ou le JIS X6319-4) ou par l'intermédiaire d'un protocole propriétaire. Par rapport à des protocoles de communication standardisés connus, l'invention pourra être mise en oeuvre en définissant de nouveaux messages pour requérir une nouvelle commande de la carte à puce maître ou indiquer une disponibilité pour une nouvelle commande.

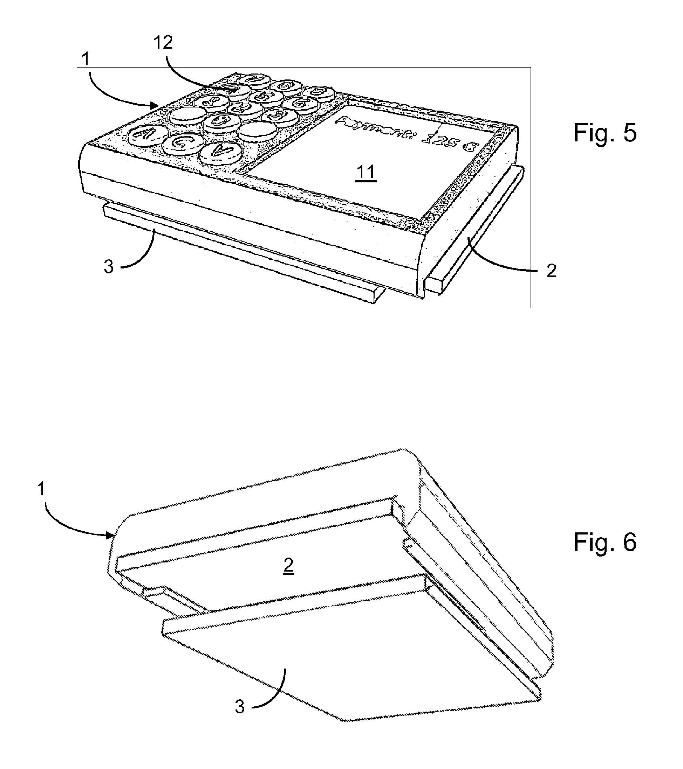

Les figures 5 et 6 représentent en perspective un mode de réalisation d'un lecteur 1 accolé aux cartes à puce 2 et 3. Le lecteur 1 comprend avantageusement un logement pour maintenir la carte 2 en place, ce qui permet à son titulaire d'avoir les mains libres pour manipuler le lecteur 1 et en particulier le clavier 12. Le logement est réalisé sous forme de glissière ménagée dans la partie inférieure du lecteur 1. Le lecteur 1 pourra avantageusement comprendre également un autre logement pour maintenir la carte 3 en place.

Le lecteur 1 peut disposer d'une connexion longue portée vers un serveur tel qu'un serveur de paiement. Cette liaison longue distance peut être réalisée au moyen d'une liaison GSM ou GPRS ou par l'intermédiaire d'une liaison de type Bluetooth LAP.

Le lecteur 1 peut par exemple être mis en oeuvre sous forme de borne publique à demeure, utilisable par différents utilisateurs munis de leur propre carte à puce maître comprenant une application sécurisée. Une telle borne pourra par exemple être utilisée sur un marché, où différents commerçants auront chacun leur carte à puce maître pour réaliser une transaction monétaire sécurisée avec des clients.

L'invention pourra être mise en oeuvre avec tout type de carte à puce sans contact, une carte SIM insérée dans un téléphone mobile ayant une fonction NFC pouvant notamment émuler le fonctionnement d'une carte à puce sans contact.

Avantageusement, le lecteur 1 peut permettre à une des cartes à puce 2 ou 3 de fonctionner en maître pour un des périphériques, l'écran 11 ou le clavier 12 dans l'exemple illustré. Le lecteur 1 peut à cet effet comprendre une application réflecteur chargée de récupérer une commande auprès d'une carte à puce fonctionnant en maître, répercutant cette commande à un périphérique, récupérant une réponse du périphérique, et répercutant cette réponse à la carte à puce.

## Revendications

1. Procédé de communication entre une carte à puce maître (2) et une carte à puce esclave (3) par l'intermédiaire d'un lecteur de cartes à puce, la carte à puce maître (2) exécutant une application destinée à réaliser une transaction sécurisée avec la carte à puce esclave (2), le procédé comprenant les étapes de :
- ladite application de la carte à puce maître (2) transmet au lecteur une commande destinée à la carte à puce esclave (3) ;
- le lecteur transmet la commande à la carte à puce esclave;
- la carte à puce esclave transmet au lecteur une réponse à la commande;
- le lecteur transmet la réponse à la carte à puce maître et signale sa disponibilité pour une nouvelle commande;
- ladite application de la carte à puce maître (2) traite ladite réponse;
- lesdites cartes à puce étant des cartes à puce sans contact, le lecteur de carte à puce présentant une interface de communication sans contact (1), lesdites transmissions étant effectuées depuis et vers l'interface de communication sans contact.

2. Carte à puce sans contact (3), **caractérisée en ce qu'**elle comprend :
- une interface de communication sans contact (26) ;
- une mémoire (22,23) mémorisant une application apte à identifier par l'intermédiaire de l'interface de communication la disponibilité d'un lecteur (1) pour la soumission d'une commande à destination d'une autre carte à puce, apte à soumettre une telle commande au lecteur, et apte à réaliser une transaction sécurisée avec ladite autre carte (3) ;
- un module de traitement (21) apte à exécuter l'application mémorisée.

3. Lecteur de cartes à puce sans contact (1), **caractérisé en ce qu'**il comprend une interface de communication sans contact, et un module de traitement (13) apte, par l'intermédiaire de l'interface de communication sans contact, à recevoir des commandes d'une première carte à puce (2) exécutant une application sécurisée maître, à indiquer sa disponibilité pour la réception de commandes de la part de la première carte à puce, à transmettre une commande reçue de la première carte à puce à une deuxième carte à puce (3), à recevoir une réponse de la deuxième carte à puce, et à transmettre la réponse reçue à la première carte à puce (2).

4. Lecteur selon la revendication 3, comprenant un écran d'affichage et une interface de commande pour un utilisateur, le module de traitement étant apte à proposer sur l'écran d'affichage l'exécution d'une application sécurisée d'une carte à puce sans contact, apte à déterminer la sélection par l'utilisateur d'une application sécurisée par l'intermédiaire de l'interface de commande, et apte à indiquer sa disponibilité pour la réception de commandes à la carte à puce disposant de l'application sécurisée sélectionnée.

5. Système comprenant :
- un lecteur de cartes à puce (1) selon la revendication 3 ou 4 ;
- une carte à puce (2) selon la revendication 2 ;
- une carte à puce sans contact (3) apte à répondre à des commandes transmises par le lecteur (1).
